Europäisches Patentamt

European Patent Office

Office européen des brevets

(19)

(11) **EP 0 300 507 B1**

(12) **EUROPEAN PATENT SPECIFICATION**

(45) Date of publication and mention
of the grant of the patent:
**24.04.1996 Bulletin 1996/17**

(51) Int Cl.$^6$: **G06F 11/00**

(21) Application number: **88111957.2**

(22) Date of filing: **25.07.1988**

(54) **Generator for generating a bus cycle end signal for debugging operation**

Generator zur Erzeugung eines Buszyklusendsignals zur Austestoperation

Générateur de génération de fin de cycle de bus pour opération de mise au point

(84) Designated Contracting States:
**DE FR GB**

(30) Priority: **24.07.1987 JP 185918/87**

(43) Date of publication of application:
**25.01.1989 Bulletin 1989/04**

(73) Proprietor: **NEC CORPORATION**
**Tokyo (JP)**

(72) Inventor: **Shouda, Masahiro c/o NEC Corporation**
**Minato-ku Tokyo (JP)**

(74) Representative: **Glawe, Delfs, Moll & Partner**
**Patentanwälte**
**Postfach 26 01 62**
**D-80058 München (DE)**

(56) References cited:
**GB-A- 2 112 972**

- **INTEL MICROSYSTEM COMPONENTS**
**HANDBOOK 1986, pages 3.1 - 3.24 and pages**
**3-246 - 3-253, Intel Corp.**

# Description

Background of the Invention

Field of the Invention

The present invention relates to a debugging microprocessor used in a microprocessor development support system, and more specifically to a debugging microprocessor having a generator for generating a bus cycle end signal for a microprocessor development support system having a function capable of tracing and analyzing the result of execution.

Description of related art

Hitherto, two types of debugging microprocessors have been known. A first type of debugging microprocessor is such that the sampling timing of a ready signal is different from the sampling timing of data, and therefore, data is sampled at a clock state next to a clock state in which the ready signal is rendered effective. Further, this type of debugging microprocessor is constructed to generate a bus cycle signal BCY indicative of a bus cycle and a data strobe signal DS for input/output of data. Therefore, the bus cycle signal BCY or the data strobe signal DS is added, as the content to be traced, to an address, data and the like, and then, the bus cycle signal BCY or the data strobe signal DS being traced is checked so that effective address and data contained in the content being traced are clarified, with the result that it is possible to analyze an executed instruction on the basis of the result of trace. Accordingly, a microprocessor development support system in combination with this type of debugging microprocessor will involve no problem in the analysis of the trace result.

A second type of debugging microprocessor is such that the sampling timing of a ready signal is the same as the sampling timing of data, and therefore, data is sampled at the same time as the ready signal is judged to be effective. The latest high performance microprocessors are of this type, and therefore, recent debugging microprocessors are also of this type.

The second type of debugging microprocessor is constructed to output a bus cycle start signal BST indicative of the start of the bus cycle, but does not generates a signal corresponding to the bus cycle signal BCY or the data strobe signal DS of the first type of debugging microprocessor. Namely, since there is no signal corresponding to the bus cycle signal BCY or the data strobe signal DS, an effective input data is not sure. Therefore, the microprocessor development support system using this type of debugging microprocessor has been required to trace the ready signal READY for the purpose of detecting an effective input data.

As mentioned above, since the second type of debugging processor is adapted to generate the bus cycle start signal, it is possible to detect the timing where an address is effective, by tracing the bus cycle start signal. On the other hand, in order to detect the timing where the input data is effective, it is necessary to trace the ready signal. Furthermore, there is no way other than to conclude that the data appearing when the ready signal being traced is in an active condition is effective. However, even if the ready signal being traced is in an active condition, it may happen that the debugging microprocessor itself does not judge that the ready signal at this timing is active. Namely, a sufficient reliability cannot be obtained in detecting a correct effective input data on the basis of the trace data.

In "Intel Microsystem Components Handbook 1986" from Intel Corporation there is disclosed a READY-signal related circuit of the intel 8284A which is a peripheral circuit for the intel 8086.

The 8284A chip is designed to work with the 8086 microprocessor to provide it with the system clock and a synchonized READY signal. The 8284A chip receives an asynchronous READY signal and generates a synchronous READY signal to send to the 8086 microprocessor. The clock generator is configured to internally sample the asynchronous READY signal and to generate a synchronized READY signal to be outputted. This synchronized READY signal is used to control whether or not the bus cycle of 8086 (which is a main CPU) is advanced. With the synchronisation, 8086 can surly operate with the READY signal. The 8284 can only synchronize the READY signal.

Summary of the Invention

Accordingly, it is an object of the present invention to provide a debugging microprocessor which is used in a microprocessor development support system and which has overcome the above mentioned defect of the conventional one.

Another object of the present invention is to provide a debugging microprocessor for use in a microprocessor development support system having a function capable of tracing and analyzing the result of execution, which debugging microprocessor can give a sufficient reliability to the analysis of the trace result.

Another object of the present invention is to generate and output a signal indicative of the data fetched and traced by the microprocessor.

These objects are achieved by a generator for generating a bus cycle end signal according to claim 1. The dependent claims are related to further different advantageous aspects of the present invention.

In one embodiment, the control circuit includes a D-type flipflop having a clock input connected to receive the clock and a D-input connected to receive the internal ready signal so as to generate the bus cycle end signal at its Q output.

In another embodiment, the control circuit includes a state decoder connected to receive the clock and the internal ready signal and operating to generate at least a first state signals $ST_1$, a second state signal $ST_2$, a wait state signal $ST_W$ and an idle state signal $ST_I$, and a NOR gate receiving the first state signals $ST_1$ and the idle state signal $ST_I$ for generating the bus cycle end signal at its Q output.

The above and other objects, features and advantages of the present invention will be apparent from the following description of preferred embodiments of the invention with reference to the accompanying drawings.

Brief Description of the Drawings

Figure 1 is a timing chart illustrating a bus cycle executed in the first type of conventional debugging microprocessor;
Figure 2 is a chart similar to Figure 1 but illustrating a bus cycle executed in the second type of conventional debugging microprocessor;
Figure 3 is a block diagram of a generator for generating a bus cycle end signal, which is contructed in accordance with the present invention and is used in a debugging microprocessor for a microprocessor development support system having a function capable of tracing and analyzing the result of execution;
Figure 4 is a timing chart illustrating a bus cycle executed in the one embodiment of the debugging microprocessor shown in Figure 3; and
Figure 5 is a diagram similar to Figure 3 but showing a second embodiment of the bus cycle end signal generator constructed in accordance with the present invention.

Description of the Preferred embodiments

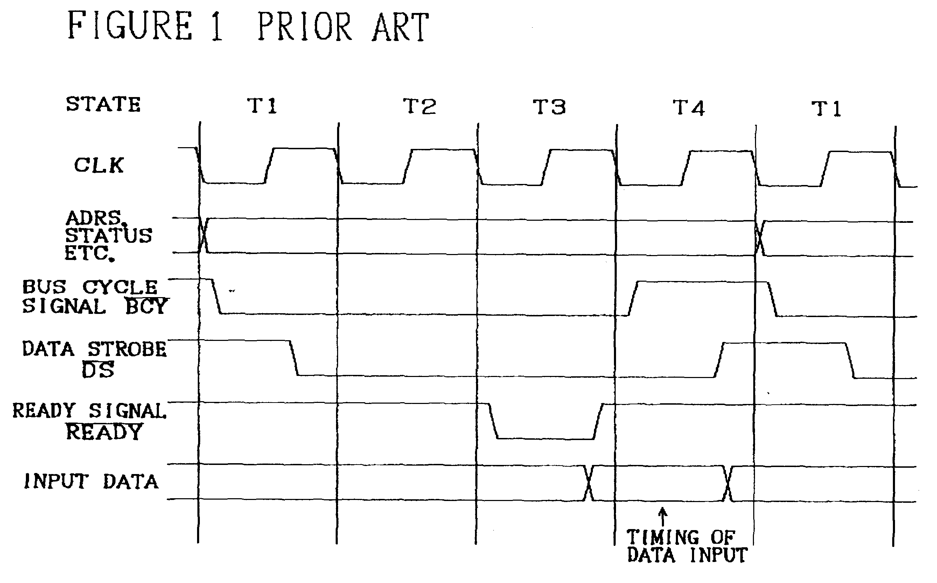

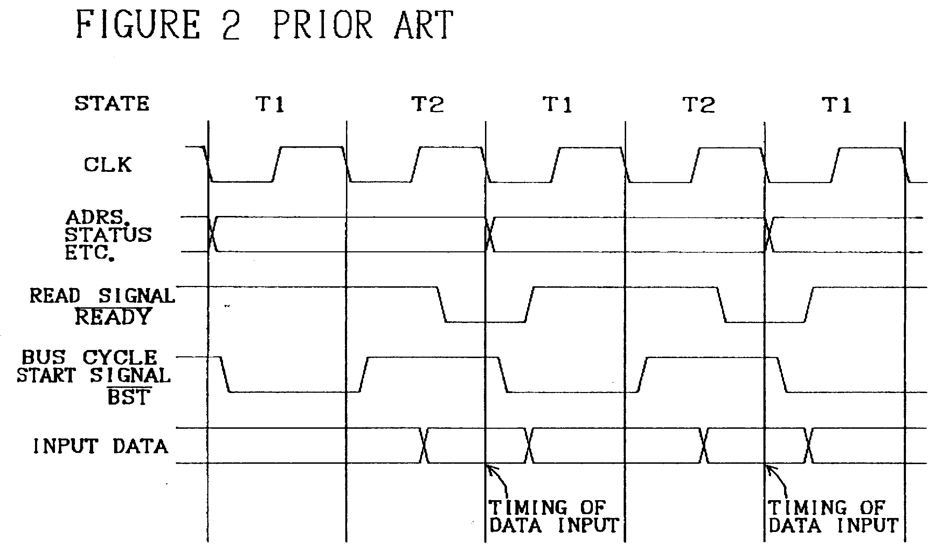

Before explaining an embodiment of the debugging microprocessor in accordance with the present invention, reference should be made to Figures 1 and 2 which illustrate a timing chart of a bus cycle executed in the first and second types of convention debugging microprocessor as mentioned above, respectively. In these figures, overhead or overlying lines indicate a negative logic.

From comparison between Figures 1 and 2, it would be understood that in the second type of debugging microprocessor there is no signal corresponding to a bus cycle signal BCY or a data strobe signal DS, as shown in Figure 2, and therefore, the microprocessor development support system using the second type of debugging microprocessor has been required to trace the ready signal READY for the purpose of detecting an effective input data. Furthermore, there is no way other than to conclude that the data at a timing where the ready signal being traced is in an active condition is effective. However, even if the ready signal being traced is in an active condition, it may happen that the debugging microprocessor itself does not judge that the ready signal at this timing is active. Namely, a sufficient reliability cannot be obtained in detecting a correct effective input data on the basis of the trace data.

The present invention has been made to overcome this problem in the second type of debugging processor.

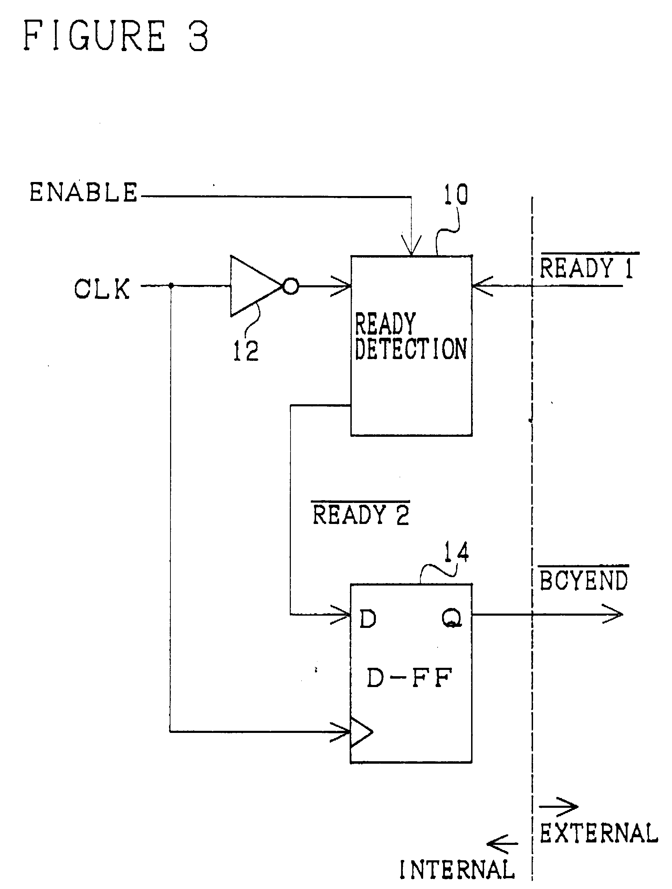

Referring to Figure 3, there is shown a diagram of a debugging microprocessor in accordance with the present invention. The shown debugging microprocessor includes a ready detection circuit 10 connected to receive a clock CLK through an inverter 12 and an external ready signal $\overline{READY\,1}$ from an external. This ready detection circuit 10 is also connected to receive an enable signal ENABLE which is rendered active only when the debugging microprocessor is in a condition capable of accepting data When the enable signal ENABLE is active, the ready detection circuit 10 operates to check the status of the external ready signal $\overline{READY\,1}$ at each falling edge of the clock CLK, and to generate an internal ready signal $\overline{READY\,2}$ if the external ready signal $\overline{READY\,1}$ is active. This internal ready signal $\overline{READY\,2}$ is inputted to a D input of a D-type flipflop 14, which is in turn connected to receive the clock CLK at its clock input. This flipflop 14 checks the status of the internal ready signal $\overline{READY\,2}$ at a rising edge of each clock CLK, and to output an active bus cycle end signal $\overline{BCYEND}$ from its Q output if the the internal ready signal $\overline{READY\,2}$ is active.

Incidentally, as would be seen from the above, a dotted line shown in Figure 3 indicates an imaginary boundary between the internal and the external of the microprocessor. Namely, the left side of the dotted line indicates the internal of the microprocessor, and the right side of the dotted line indicates the external of the microprocessor. In addition, the other circuits of the debugging microprocessor and the other signals (such as address, data, and status signals) for the debugging microprocessor are omitted for simplification of the drawings and the explanation.

The above mentioned debugging processor operates with bus cycles each fundamentally composed of two clockcycles. Therefore, If the enable signal ENABLE is active, the ready detection circuit 10 samples the external ready signal $\overline{READY\,1}$ at an end of one machine cycle, namely at a falling edge of a clock for a second rate (T2) of one machine cycle, or at an end of a dummy cycle such a wait cycle and an idle cycle (at a falling edge of a clock for the dummy cycle). If the external ready signal $\overline{READY\,1}$ is then active, the debugging processor fetches the data at that time and goes into a next bus cycle. On the other hand, if the external ready signal $\overline{READY\,1}$ is inactive, a wait state TW is interposed after the T2 state. Thereafter, if the external ready signal $\overline{READY\,1}$ is active at an end of the wait state, namely at the falling edge of a clock which constitutes the wait state, data at that time is fetched, and the microprocessor will go into an idle state TI which is a next bus cycle. This idle state TI means that a bus cycle has not been started, and it is assumed that a $\overline{BST}$ signal indicates a start of a bus cycle.

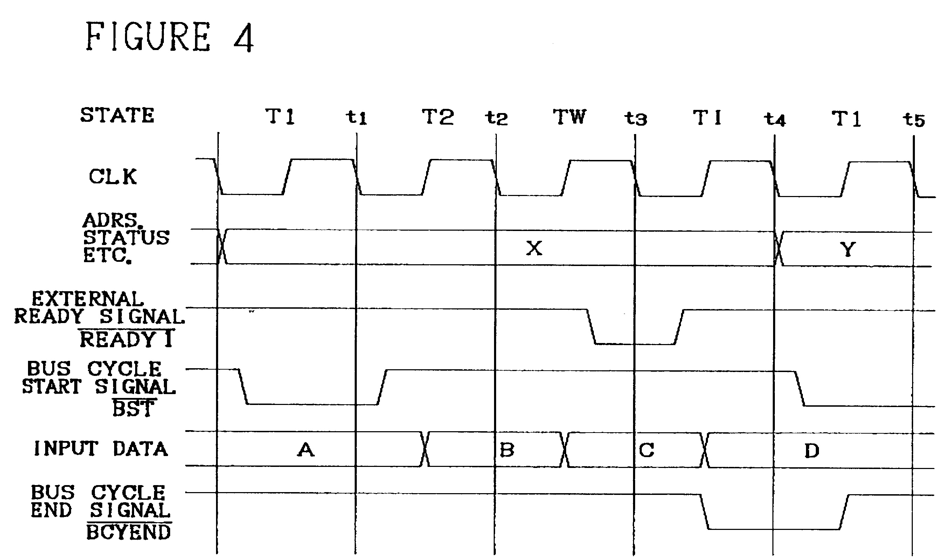

Now, operation will be explained with reference to Figure 4 which illustrates a timing chart of the operation. In this figure, overhead or overlying lines indicate a negative logic. Here, assume that each cycle is constituted of a T1 state and a T2 state, and the enable signal ENABLE is rendered active at a rising edge of a clock for the T2 state and inactive at a rising edge of a clock for a succeeding T1 state or at a rising edge of a clock for an idle state succeeding to the T2 state.

Thus, the enable signal ENABLE is rendered active at a rising edge of a clock for the T2 state, and therefore, the ready detection circuit 10 samples the external ready signal $\overline{READY\ 1}$ at an end of the T2 state, namely at a timing t2. Assuming that the external ready signal $\overline{READY\ 1}$ is inactive at the timing t2 as shown in Figure 4, the ready detection circuit 10 will maintain the internal ready signal $\overline{READY\ 2}$ inactive, and then, as mentioned above, a wait state TW is interposed after the T2 state. Thereafter, the ready detection circuit 10 samples the external ready signal $\overline{READY\ 1}$ at an end of the wait state TW, namely at a timing t3. Assuming that the external ready signal $\overline{READY\ 1}$ is active at the timing t3 as shown in Figure 4, the ready detection circuit 10 will render the internal ready signal $\overline{READY\ 2}$ active. This active internal ready signal $\overline{READY\ 2}$ is maintained from the timing t3 to a rising edge of a clock for a next idle state, since the enable signal ENABLE will be rendered inactive at a rising edge of a clock for a succeeding T1 state or at a rising edge of a clock for an idle state succeeding to the T2 state.

The active internal ready signal $\overline{READY\ 2}$ is applied to the D input of the flipflop 14, and therefore, is sampled to the flipflop 14 in response to a rising edge of a clock just after the internal ready signal $\overline{READY\ 2}$ has been rendered active. As a result, the bus cycle end signal $\overline{BCYEND}$ outputted from the flipflop 14 is made active from a rising edge of a clock for the idle state TI to a rising edge of a clock for a state next to the idle state TI. Therefore, in this example, the T1 and T2 states are followed by the wait state TW, which is succeeded, by the idle state TI, which then goes into a next T1 state.

The following TABLE 1 indicates the result of trace in a debugging microprocessor having no bus cycle end signal $\overline{BCYEND}$, and the TABLE 2 shows the timing in the embodiment of the debugging microprocessor in accordance with the present invention.

TABLE 1

| TIMING | ADDRESS | $\overline{BST}$ | DATA |
|--------|---------|------|------|
| t1 | X | 0 | A |
| t2 | X | 1 | B |
| t3 | X | 1 | C |
| t4 | X | 1 | D |
| t5 | Y | 0 | D |

TABLE 2

| TIMING | ADDRESS | $\overline{BST}$ | DATA | $\overline{BCYEND}$ |
|--------|---------|------|------|--------|
| t1 | X | 0 | A | 1 |
| t2 | X | 1 | B | 1 |
| t3 | X | 1 | C | 1 |
| t4 | X | 1 | D | 0 |
| t5 | Y | 0 | D | 1 |

In the conventional debugging microprocessor, it can be seen from the TABLE 1 that an address is effective when the $\overline{BST}$ signal is of 0, but it is not sure which of the data A, B, C and D is fetched by the debugging microprocessor. Even if the external ready signal $\overline{READY1}$ is directly traced, since there is no guarantee that the active condition (and the inactive condition) of the external ready signal as the result of the trace is perfectly consistent with the external ready signal $\overline{READY1}$ which is detected by the debugging microprocessor, there is a possibility that an error occurs in the result of analysis of the traced result.

But, as shown in TABLE 2, it can be clearly known by tracing the bus cycle end signal $\overline{BCYEND}$ outputted from the debugging microprocessor in accordance with the present invention, that the timing t3 before the sample timing at which the bus cycle end signal $\overline{BCYEND}$ becomes active has traced an effective data.

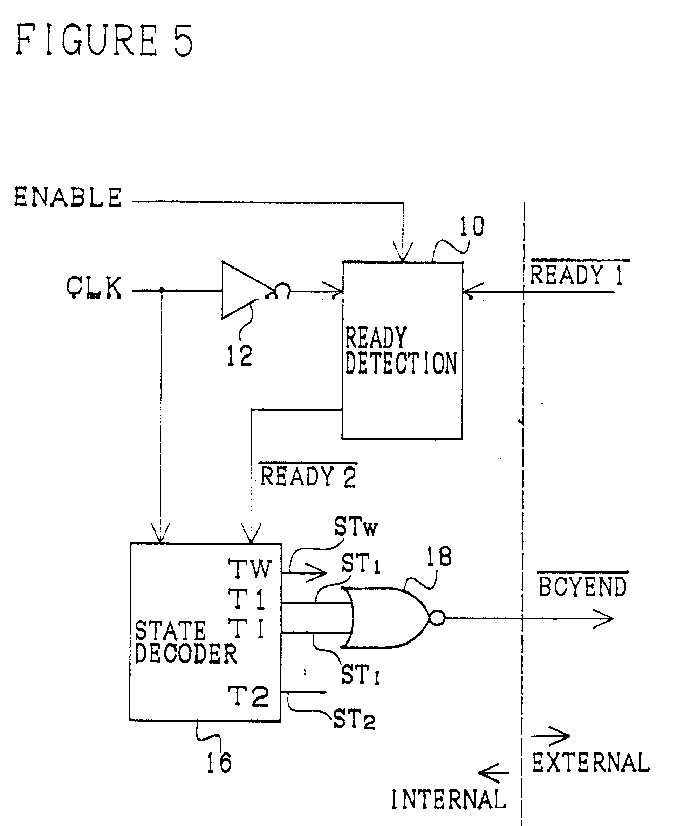

Turning to Figure 5, there is shown a second embodiment of the debugging microprocessor in accordance with the present invention. In Figure 3, elements and signals similar to those of first embodiment shown in Figure 3 are given the same Reference Numerals, and therefore, explanation thereof will be omitted.

As seen from comparison between Figures 3 and 5, the second embodiment includes, in place of the flipflop 14, a state decoder 16 which is connected to receive the clock CLK and the internal ready signal $\overline{READY2}$ and is adapted to generate state signals $ST_1$, $ST_2$, $ST_W$ and $ST_I$ indicative of the states T1, T2 TW and TI, respectively. The state signals $ST_1$ and $ST_I$ are inputted to a NOR gate 18 which generates the bus cycle end signal $\overline{BCYEND}$. Each of the state signals $ST_1$, $ST_2$, $ST_W$ and $ST_I$ is active when it is at a high level. Therefore, the bus cycle end signal $\overline{BCYEND}$ is maintained active when the bus cycle is either in the T1 state or in the TI state. Accordingly, in this embodiment, the analysis of the trace result assumes that the data just before the bus cycle end signal $\overline{BCYEND}$ has changed from the inactive condition to the active condition is a correct data.

As has been described above, the debugging microprocessor in accordance with the present invention generates the internal ready signal in response to the external ready signal and is triggered by the internal ready signal to generate the bus cycle end signal to the external of the debugging microprocessor. Therefore, if this bus cycle end signal is added to the content to be traced by the microprocessor development support system, it is possible to give a sufficient reliability to the analysis of the trace result, particularly the discrimination of a correct data.

## Claims

1. A generator for generating a bus cycle end signal (BCYEND) incorporated in a debugging microprocessor,

   said debugging microprocessor going into a wait state to wait for the input of a next external data on a bus after finishing its bus cycle until an external ready signal (READY1) is active indicating that external data to be traced and analysed by the debugging microprocessor is available on the bus;
   said generator comprising:
   a ready detection circuit (10), receiving a clock signal (CLK), said external ready signal (READY1) and an enable signal (ENABLE) which is rendered active only when the debugging microprocessor is in a condition capable of accepting data, wherein said ready detection circuit (10) operates to detect the status of said external ready signal (READY1) at the falling edge of said clock signal (CLK) and to generate an internal ready signal (READY2) if both said external ready signal (READY1) and said enable signal (ENABLE) are active;
   a control circuit (14; 16,18) responding to said internal ready signal (READY2) and said clock signal (CLK) for generating and outputting a bus cycle end signal (BCYEND) indicating that the external data which appears on the bus just before the bus cycle end signal (BCYEND) changed from inactive to active condition is the data fetched and traced by the debugging microprocessor.

2. A generator claimed in claim 1, wherein said control circuit (14; 16,18) includes a D-type flipflop (D-FF) having a clock input connected to receive said clock signal (CLK) and a D-input connected to receive said internal ready signal (READY2) so as to generate said bus cycle end signal (BCYEND) at its Q output.

3. A generator claimed in claim 1, wherein said control circuit (14; 16,18) includes a state decoder connected to receive said clock signal (CLK) and said internal ready signal (READY2) and operating to generate at least a first state signal (ST1), a second state signal (ST2), a wait state signal (STw) and an idle state signal (STI), and a NOR gate (18) receiving said first state signal (ST1) and said idle state signal (STI) for generating said bus cycle end signal (BCYEND).

## Patentansprüche

1. Generator zur Erzeugung eines Buszyklus-Endsignals in einem Fehlersuch- und Beseitigungs-Mikroprozessor,

   wobei der Fehlersuch- und Beseitigungs-Mikroprozessor in einen Wartezustand geht, um auf den Eingang eines nächsten externen Datums an einer Busleitung nach Beendigung seines Buszyklus zu warten, bis ein externes Betriebsbereitsignal (READY) aktiv ist, das angibt, daß externe Daten die durch den Mikroprozessor verfolgt und analysiert werden sollten, am Bus verfügbar sind;
   wobei der Generator aufweist:
   eine Betriebsbereit-Detektorschaltung (10), die ein Taktsignal, das externe Betriebsbereits-Signal (READY) und ein Freigabesignal (ENABLE), das nur dann aktiv wird, wenn der Fehlersuch-Mikroprozessor in einem freigegebenen Zustand ist, in welchem er Daten annehmen kann, empfängt, wobei die Betriebsbereit-Detektorschaltung (10) den Zustand des externen Betriebsbereit-Signals (READY) an der fallenden Flanke des Taktsignals (CLK) detektiert und ein internes Betriebsbereit-Signal (READY2) erzeugt, wenn sowohl das externe Betriebsbereit-Signal (READY) als auch das Freigabe-Signal (ENABLE) aktiv sind;
   eine Steuerschaltung (14; 16; 18), die auf das interne Betriebsbereit-Signal (READY) und das Taktsignal CLK anspricht, um ein Buszyklus-Endsignal (BCYEND) zu erzeugen und auszugeben, das angibt, daß das externe Datum, das an der Busleitung, direkt bevor das Buszyklus-Endsignal (BCYEND) vom inaktiven in den aktiven Zustand geschaltet hat, erscheint, das Datum ist, welches vom Fehlersuch- und Beseitungsmikroprozessor aufgerufen und verfolgt worden ist.

2. Generator nach Anspruch 1,
   wobei die Steuerschaltung (14; 16; 18) ein D-Typ-Flip-Flop (D-FF) aufweist, das mit einem Takteingang so geschaltet ist, daß er das Taktsignal CLK empfängt und einem D-Eingang so geschaltet ist, daß er das interne Betriebsbereit-Signal (READY2) empfängt, um das Buszyklus-Endsignal (BCYEND) an seinem Q-Ausgang zu erzeugen.

3. Generator nach Anspruch 1,

wobei die Steuerschaltung (14; 16; 18) einen Zustandsdekoder hat, der so geschaltet ist, daß er das Taktsignal (CLK) und das interne Betriebsbereit-Signal (READY2) empfängt und so operiert, daß er wenigstens ein erstes Zustandssignal (ST1), ein zweites Zustandssignal (ST2), ein Wartezustandssignal (STW) und ein Leerlaufzustands-Signal (STI) erzeugt, und ein NOR-Gate 18, das das erste Zustandssignal (ST1) und das Leerlauf-Zustands-Signal (STI) empfängt, um das Buszyklus-Endsignal (BCYEND) zu erzeugen.

## Revendications

1. Générateur de génération de signal de fin de cycle de bus (BCYEND) intégré à un microprocesseur de mise au point,

   ledit microprocesseur de mise au point passant dans un état d'attente pour attendre l'entrée d'une donnée externe suivante sur un bus après la fin de son cycle de bus, jusqu'à ce qu'un signal d'état prêt externe (READY1) soit actif, ce qui indique que la donnée externe à suivre et à analyser par le microprocesseur de mise au point est disponible sur le bus;
   ledit générateur comprenant :
   un circuit (10) de détection d'état prêt recevant un signal d'horloge (CLK), ledit signal d'état prêt externe (READY1) et un signal de validation (ENABLE) qui n'est rendu actif que lorsque le microprocesseur de mise au point est dans un état capable d'accepter les données, ledit circuit (10) de détection d'état prêt ayant pour fonction de détecter l'état dudit signal d'état prêt externe (READY1) sur le front descendant dudit signal d'horloge (CLK) et de générer un signal d'état prêt interne (READY2) si ledit signal d'état prêt externe (READY1) et ledit signal de validation (ENABLE) sont tous deux actifs;
   un circuit (14; 16, 18) de commande répondant audit signal d'état prêt interne (READY2) et audit signal d'horloge (CLK) pour générer et fournir en sortie un signal de fin de cycle de bus (BCYEND) indiquant que la donnée externe qui apparaît sur le bus immédiatement avant que le signal de fin de cycle de bus (BCYEND) soit passé de l'état inactif à l'état actif, est la donnée recherchée et suivie par le microprocesseur de mise au point.

2. Générateur selon la revendication 1, dans lequel ledit circuit de commande (14; 16, 18) comporte une bascule de type D (D-FF) ayant une entrée d'horloge connectée pour recevoir ledit signal d'horloge (CLK) , et une entrée D connectée pour recevoir ledit signal d'état prêt interne (READY2) afin de générer ledit signal de fin de cycle de bus (BCYEND) sur sa sortie Q.

3. Générateur selon la revendication 1, dans lequel ledit circuit (14; 16, 18) de commande comporte un décodeur d'état connecté pour recevoir ledit signal d'horloge (CLK) et ledit signal d'état prêt interne (READY2) et ayant pour fonction de générer au moins un premier signal d'état (ST1), un second signal d'état (ST2), un signal d'état d'attente (STw) et un signal d'état inactif (STI), et une porte NON-OU (18) recevant ledit premier signal d'état (ST1) et ledit signal d'état inactif (STI) pour générer ledit signal de fin de cycle de bus (BCYEND).

FIGURE 1  PRIOR ART

EP 0 300 507 B1

# FIGURE 2  PRIOR ART

# FIGURE 3

# FIGURE 4

EP 0 300 507 B1

# FIGURE 5